# EUROPÄISCHE PATENTSCHRIFT

(11) **EP 1 118 921 B1**
(45) Veröffentlichungstag und Bekanntmachung des Hinweises auf die Patenterteilung: **15.06.2005**
(21) Anmeldenummer: 00125729.4
(22) Anmeldetag: 24.11.2000
(51) Int. Cl.: G05D 16/06

(54) **Druckregelventil mit Sekundärentlüftungsmassnahmen**
Pressure control valve with secondary venting features
Vanne de régulation de pression ayant des moyens secondaires de mise à l'atmosphère

(30) Priorität: 22.01.2000 DE 10002752
(43) Veröffentlichungstag der Anmeldung: 25.07.2001
(73) Patentinhaber: Festo AG & Co, 73734 Esslingen (DE)
(72) Erfinder: Berger, Rolf, 72649 Wolfschlugen (DE)
(74) Vertreter: Abel, Martin, Dipl.-Ing.

(56) Entgegenhaltungen:
- DE-A- 2 457 371
- DE-A- 19 810 391
- DE-U- 29 512 498
- GB-A- 2 099 112
- US-A- 3 545 471
- US-A- 3 926 204

## Beschreibung

Die Erfindung betrifft ein Druckregelventil mit Sekundärentlüftungsmaßnahmen, mit einem mit einem Primärdruck beaufschlagbaren Primärkanal, mit einem den Abgriff eines geregelten Sekundärdruckes ermöglichenden Sekundärkanal und mit einem zur Steuerung der Fluidverbindung zwischen dem Primärkanal und dem Sekundärkanal dienenden beweglichen Steuerglied, dessen Stellung durch ein mit einer einstellbaren Vorgabekraft beaufschlagbares bewegliches Stellglied beeinflußbar ist, das von einem beweglichen Wandabschnitt einer mit dem Sekundärkanal kommunizierenden Vergleichskammer gebildet ist und das verschieblich und unter Abdichtung eine die Vergleichskammer vom Sekundärkanal abtrennende gehäusefeste Trennwand durchsetzt, wobei es außerhalb der Vergleichskammer und dabei entweder unmittelbar im Sekundärkanal oder in einem mit dem Sekundärkanal in Verbindung stehenden Bereich eine ebenfalls von dem Steuerglied gesteuerte, zur Entlüftung des Sekundärkanals dienende Entlüftungsöffnung aufweist.

Aus dem Produktkatalog "Der Pneumatic-Katalog 98", Seite 9.3/12-1, geht ein Druckregelventil hervor, das vor allem im Zusammenhang mit der Druckluftaufbereitung in Druckluftnetzen verwendet wird, um den sekundärseitig abgreifbaren Arbeitsdruck unabhängig von sekundärseitigen Druckschwankungen weitgehend konstant zu halten. Die Sekundärentüftungsmaßnahmen ermöglichen dabei eine Reduzierung des im Sekundärkanal anstehenden Sekundärdruckes, beispielsweise zur Entlüftung des angeschlossenen Sekundärstranges oder bei durch den Betrieb der angeschlossenen Verbraucher bedingten sekundärseitigen Druckerhöhungen.

Bei diesem bekannten Druckregelventil ergibt sich eine nicht geringe Schwingungsproblematik durch sekundärseitige Druckschwankungen. Mit höherer Durchflußleistung bzw. höherem genutztem Durchfluß des Reglers steigt die Schwingungsneigung an. Zur Reduzierung der Schwingungen müssen daher die technischen Leistungsdaten der Druckregler, insbesondere die maximal erreichbaren Durchflußwerte, kleiner gehalten werden, als dies technisch möglich wäre. Die Entlüftungsströmung bei freigegebener Entlüftungsöffnung verläuft ausgehend vom Sekundärkanal durch den Verbindungskanal hindurch in die Vergleichskammer und ausgehend von dieser über die Entlüftungsöffnung zur Umgebung. Bedingt durch den begrenzten Querschnitt des Verbindungskanals, der auch als Abfragekanal bezeichnet werden könnte, fällt während des Entlüftungsvorganges der in der Vergleichskammer herrschende Druck schneller und stärker ab als der im Sekundärkanal anstehende Sekundärdruck. Dies führt zu einer Überreaktion des Reglers bzw. des Regelkreises, und der Regler gerät in Schwingung. Zwar läßt sich dieser Schwingungsneigung durch Verkleinern sowohl des Querschnitts der Entlüftungsöffnung als auch des Querschnitts des Verbindungskanals entgegenwirken (physikalische Dämpfung). Dies geht jedoch zu Lasten des Ansprechverhaltens des Druckregelventils, wobei die vom sekundärseitig angeschlossenen Fluidnetz zurückwirkenden Überdrücke weniger schnell abgebaut werden können.

Aus der DE 24 57 371 A geht ein Druckregelventil der eingangs genannten Art hervor, bei dem sich die Entlüftungsöffnung an der Stirnseite eines Fortsatzes des Steuergliedes befindet, der die gehäusefeste Trennwand zwischen der Vergleichskammer und dem Sekundärkanal durchsetzt und in den Sekundärkanal hineinragt. Das Steuerglied ist topfförmig ausgebildet und auf der der Trennwand entgegengesetzten Unterseite am Gehäuse des Druckregelventils verschiebbar geführt.

Es ist die Aufgabe der vorliegenden Erfindung, ein Druckregelventil mit reduzierter Schwingungsneigung bereitzustellen.

Zur Lösung dieser Aufgabe ist gemäß dem kennzeichnenden Teil des Patentanspruches 1 vorgesehen, dass das Steuerglied an seinem der Entlüftungsöffnung zugeordneten Endabschnitt innerhalb des Sekundärkanals durch eine gehäusefeste Führungseinrichtung verschiebbar geführt ist, die einen in der gehäusefesten Trennwand verankerten Führungseinsatz enthält, der in den Sekundärkanal hineinragt und dort den Endabschnitt des Steuergliedes zumindest partiell umschließt.

Bei der erfindungsgemäßen Bauform ist die für die Sekundärentlüftung verantwortliche Entlüftungsöffnung aus der Vergleichskammer herausverlagert und befindet sich entweder unmittelbar im Sekundärkanal oder in einem mit dem Sekundärkanal in Verbindung stehenden Bereich, beispielsweise in einer über einen großen Querschnitt mit dem Sekundärkanal in Verbindung stehenden Zusatzkammer. Der sekundärseitig anstehende Druck liegt nun zwar weiterhin in der Vergleichskammer an und liefert die Gegenkraft zu der von außen her variabel einstellbaren Vorgabekraft, mit der sich der einzuregelnde Sekundärdruck vorgeben läßt. Die Entlüftungsströmung der Sekundärentlüftung hingegen durchsetzt nicht die Vergleichskammer und den vorgeschalteten Verbindungskanal, sondern strömt unter Umgehung der Vergleichskammer über die außerhalb derselben liegende Entlüftungsöffnung ab. Der störende Einfluß der Sekundärentlüftung wirkt sich daher nicht mehr auf das Stellglied aus, was den weiteren Vorteil mit sich bringt, daß der Querschnitt des gegebenenfalls vorhandenen Verbindungskanals verkleinert werden kann, so dass sich eine physikalische Dämpfung des Regelkreises einstellt. Als Nebenvorteil kann der Querschnitt der Entlüftungsöffnung vergrößert werden, wodurch sich die Sekundärentlüftungsleistung erhöht. Die Schwingungsneigung des Reglers wird insgesamt so weit gemindert, dass er im Betrieb weniger bis gar nicht zum Schwingen neigt und der Regler für wesentlich größere maximale Durchflußleistungen ausgelegt und betrieben werden kann. Das Steuerglied greift nicht durch eine den Primärkanal von der Vergleichskammer abteilende Trennwand hindurch, sondern endet zweckmäßigerweise noch innerhalb des Sekundärkanals, wobei seinem Endabschnitt eine innerhalb des Sekundärkanals plazierte gehäusefeste Führungseinrichtung zugeordnet ist, die einen in der vorerwähnten Trennwand verankerten und in den Sekundärkanal hineinragenden Führungseinsatz enthält.

Vorteilhafte Weiterbildungen der Erfindung gehen aus den Unteransprüchen hervor.

Das Steuerglied erstreckt sich zweckmäßigerweise in einer als Bestandteil des Sekundärkanals ausgeführten Steuerkammer, wobei die Entlüftungsöffnung innerhalb dieser Steuerkammer liegt. Ist das Steuerglied stößelartig ausgebildet, könnte die Steuerkammer auch als Stößelkammer bezeichnet werden.

Eine besonders vorteilhafte konstruktive Lösung sieht vor, daß das Stellglied mit einem die Entlüftungsöffnung aufweisenden Kopfabschnitt in den Sekundärkanal hineinragt. Dort kann der Kopfabschnitt des Stellgliedes mit einem stirnseitigen Sekundärsteuerabschnitt des Steuergliedes zusammenarbeiten.

Die Vergleichskammer steht zweckmäßigerweise über mindestens einen Verbindungskanal mit dem Sekundärkanal in Verbindung. Dieser Verbindungskanal könnte auch als Abfragekanal bezeichnet werden, weil er den im Sekundärkanal herrschenden Druck abfragt und an die Vergleichskammer weitergibt.

Der Verbindungskanal verfügt zweckmäßigerweise über einen relativ geringen Strömungsquerschnitt, was sich vorzugsweise durch eine geeignete Drosselstelle realisieren läßt. Der der Entlüftungsöffnung zugeordnete maximale Entlüftungsquerschnitt kann größer ausgeführt sein als der Querschnitt des Verbindungskanals.

Das als beweglicher Wandabschnitt der Vergleichskammer fungierende Stellglied kann kolben- und/oder membranartig aufgebaut sein. Bevorzugt verfügt es über einen die Entlüftungsöffnung enthaltenden Grundkörper, der über eine vorzugsweise zumindest partiell gummielastisch verformbare Membran unter Abdichtung gehäuseseitig fixiert ist. Dies ermöglicht eine Stellbewegung mit sehr geringer Reibung.

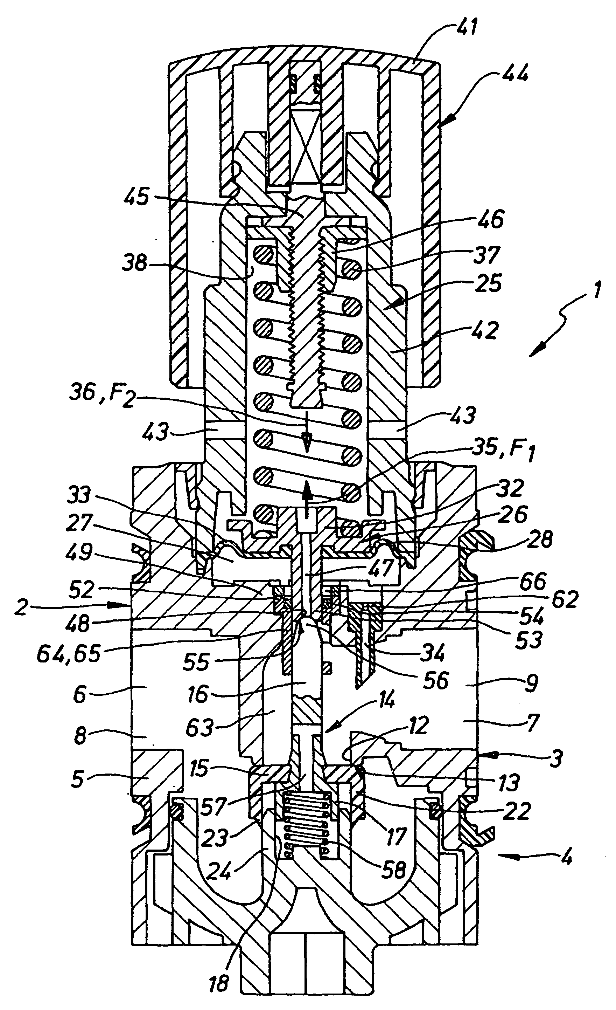

Nachfolgend wird die Erfindung anhand der beiliegenden Zeichnung näher erläutert. Die einzige Figur zeigt dabei einen Längsschnitt durch eine bevorzugte Ausführungsform des erfindungsgemäßen Druckregelventils.

Die Zeichnung zeigt im Längsschnitt ein allgemein mit Bezugsziffer 1 bezeichnetes Druckregelventil, das auch als Druckregler bezeichnet werden könnte. Es ist vorliegend in Gestalt eines sogenannten Wartungsgerätes ausgeführt, das zur Aufbereitung bzw. Konditionierung von Druckluft in Druckluftnetzen eingesetzt wird und das über an vorzugsweise entgegengesetzten Seiten angeordnete Schnittstellen 2, 3 verfügt, an denen sich weiterführende Druckmittelleitungen oder weitere Wartungsgerätetypen ansetzen lassen.

Das Druckregelventil 1 verfügt über ein Gehäuse 4 mit einem Gehäuse-Hauptkörper 5, in dem als Primärkanal 6 und als Sekundärkanal 7 bezeichnete Fluidkanäle verlaufen. Diese beiden Kanäle münden jeweils einenends im Bereich der Schnittstellen 2, 3 unter Bildung eines Primäranschlusses 8 und eines Sekundäranschlusses 9 zur Gehäuse-Außenfläche aus. Im Betrieb des Druckregelventils 1 kann über den Primäranschluß 8 unter einem Primärdruck stehende Druckluft eingespeist werden. Am Sekundäranschluß 9 läßt sich unter einem Sekundärdruck stehende Druckluft abgreifen und zu einem oder mehreren Verbrauchern weiterleiten, wobei der Sekundärdruck in der Regel geringer ist als der Primärdruck und sich in seiner Höhe durch das Druckregelventil bedarfsgemäß vorgeben läßt.
Primär- und Sekundärkanal 6, 7 stehen miteinander durch eine Überströmöffnung 12 in Verbindung, die durch einen Primär-Ventilsitz 13 umgrenzt wird. Die durch die Überströmöffnung 12 gewährleistete Fluidverbindung zwischen Primär- und Sekundärkanal 6, 7 wird durch ein bewegliches Steuerglied 14 gesteuert, das einen Primär-Steuerabschnitt 15 aufweist, der relativ zu dem Primär-Ventilsitz 13 in einer Schließstellung oder in unterschiedlichen Offenstellungen positionierbar ist. Das Steuerglied 14 hat mithin ein stetiges Steuerverhalten, wobei der Primär-Steuerabschnitt 15 in der Schließstellung dichtend am Primär-Ventilsitz 13 anliegt und dabei den Primärkanal 6 vom Sekundärkanal 7 abtrennt, während in den Offenstellungen ein mehr oder weniger großer Abstand zwischen dem Primär-Steuerabschnitt 15 und dem Primär-Ventilsitz 13 vorliegt, der der Druckluft oder einem anderen verwendeten fluidischen Druckmedium einen mehr oder weniger großen Überströmquerschnitt zwischen dem Primärkanal 6 und dem Sekundärkanal 7 zur Verfügung stellt.

Das Steuerglied 14 ist beim Ausführungsbeispiel stößelartig ausgebildet und verfügt über einen länglichen Stößelkörper 16, der mit seiner rückseitigen Endpartie 17 in einer Gehäuseausnehmung 18 verschiebbar geführt ist. Der Primär-Steuerabschnitt 15 ist vorzugsweise Bestandteil eines topfähnlichen Dichtkörpers 22, der mit zur Rückseite des Stößelkörpers 16 orientierter Topföffnung am Stößelkörper 16 fixiert ist, wobei die zur Vorderseite des Stößelkörpers 16 orientierte Bodenfläche des Dichtkörpers 22 den Primär-Steuerabschnitt 15 bildet. Der vom Boden wegweisende umlaufende Rand des Dichtkörpers 22 ist zweckmäßigerweise mit einer Dichtlippe 23 versehen, die unter Abdichtung verschiebbar einen zylindrischen Gehäusevorsprung 24 umschließt, der die Gehäuseausnehmung 18 beinhaltet. Die Dichtlippe 23 hat vorzugsweise eine Rückschlagfunktion, die bei entsprechendem Differenzdruck eine Fluidströmung vom Sekundärkanal 7 zum Primärkanal 6 zuläßt und die in der Gegenrichtung sperrt.

Das Druckregelventil 1 ermöglicht eine weitgehend konstante Einregelung des Sekundärdruckes auf einen unterhalb des Primärdruckes gewünschten Überdruckwert. Der gewünschte Sekundärdruck läßt sich durch eine Vorgabeeinrichtung 25 variabel einstellen. Die Vorgabeeinrichtung 25 beinhaltet ein im Innern des Gehäuses 4 beweglich angeordnetes Stellglied 26, das eine als Vergleichskammer 27 bezeichnete Fluidkammer begrenzt, wobei es einen beweglichen Wandabschnitt dieser Vergleichskammer 27 bildet. Die übrigen Wandabschnitte der Vergleichskammer 27 sind vom Gehäuse 4 gebildet, so daß das Volumen der Vergleichskammer 27 von der momentanen Stellung des Stellgliedes 26 abhängt.

Zur Abdichtung gegenüber dem Gehäuse 4 könnte das Stellglied 26 kolbenartig ausgeführt und unter Verwendung einer geeigneten Kolbendichtung gleitverschieblich im Gehäuse geführt sein. Beim Ausführungsbeispiel kommt allerdings zugunsten reduzierter Reibungswerte eine gleitreibungsfreie Membrandichtung 28 zum Einsatz. Konkret verfügt hierbei das Stellglied 26 über einen starren Grundkörper 32, der über eine aus Material mit gummielastischen Eigenschaften bestehende Membran 33 am Gehäuse 4 aufgehängt ist.

Die Vergleichskammer 27 kommuniziert über mindestens einen Verbindungskanal 34 ständig mit dem Sekundärkanal 7. Auf diese Weise ist die Vergleichskammer 27 ständig fluidgefüllt, wobei der in der Vergleichskammer 27 herrschende Druck normalerweise dem Sekundärdruck entspricht. Der Verbindungskanal 34 kann folglich auch als Abfragekanal bezeichnet werden, der quasi den im Sekundärkanal 7 herrschenden Druck abfrägt und in die Vergleichskammer 27 weiterleitet.

Durch den in der Vergleichskammer 27 herrschenden Vergleichsdruck wird das Stellglied 26 ständig in einer durch einen Pfeil angedeuteten Öffnungsrichtung 35 beaufschlagt. Der daraus resultierenden Öffnungskraft F₁ wirkt in einer Schließrichtung 36 eine als Vorgabekraft F₂ bezeichnete Schließkraft entgegen, die durch eine in ihrer Vorspannung variabel einstellbare Federeinrichtung 37 geliefert wird.

Die zweckmäßigerweise von einer Schraubendruckfeder gebildete Federeinrichtung 37 erstreckt sich beim Ausführungsbeispiel in einer vom Gehäuse 4 begrenzten Federkammer 38, die vorzugsweise in einem an den Gehäuse-Hauptkörper 5 angesetzten länglichen, hohlkörperartigen Abschlußdeckel 42 ausgebildet ist. Über einen oder mehrere, das Gehäuse 4 durchsetzende Auslaßkanäle 43 steht die Federkammer 38 ständig mit der Umgebung bzw. Atmosphäre in Verbindung, so daß in ihr Umgebungsdruck herrscht.

Zur variablen, bedarfsgerechten Einstellung der Vorgabekraft F₂ enthält die Vorgabeeinrichtung 25 eine Einstelleinrichtung 44. Diese beinhaltet beim Ausführungsbeispiel einen an dem Abschlußdeckel 42 drehbar gelagerten Drehknopf 41, der in drehfester Verbindung mit einer Gewindespindel 45 steht, welche mit einem in der Federkammer 38 angeordneten Beaufschlagungsteller 46 in Schraubverbindung steht. Der Beaufschlagungsteller 46 ist bezüglich des Gehäuses 4 unverdrehbar, gleichzeitig jedoch in Längsrichtung der Federkammer 38 verstellbar angeordnet, so daß sich seine momentane Axialposition durch Verdrehen des Drehknopfes 44 einstellen läßt. Er beaufschlagt das äußere Ende der Federeinrichtung 37, deren inneres Ende in der Schließrichtung 36 auf das Stellglied 26 einwirkt. Ersichtlich läßt sich nun durch Verändern der Position des Beaufschlagungstellers 46 die Vorspannung der Federeinrichtung 37 und dementsprechend die Vorgabekraft F₂ variabel vorgeben.

Die Vorgabekraft F₂ könnte zusätzlich oder alternativ zu den beim Ausführungsbeispiel vorhandenen mechanischen Vorspannmitteln auch durch Fluidkraft oder durch elektromagnetische Proportionalmagnete hervorgerufen werden.

Das Stellglied 26 ist von mindestens einem Entlüftungskanal 47 durchsetzt, dessen äußeres Ende ständig mit der Atmosphäre kommuniziert, indem es zweckmäßigerweise zur Federkammer 38 ausmündet, die mit den oben erwähnten Auslaßkanälen 43 in Verbindung steht.

Das entgegengesetzte innere Ende des Entlüftungskanals 47 bildet eine Entlüftungsöffnung 48, die wie schon die Überströmöffnung 12 ebenfalls von dem Steuerglied 14 gesteuert wird. Durch das Zusammenwirken von Stellglied 26 und Steuerglied 14 wird also darauf Einfluß genommen, ob die Entlüftungsöffnung 48 geöffnet oder geschlossen ist.

Bei der in der Zeichnung abgebildeten zweckmäßigen Bauform ragt das Stellglied 26 ausgehend von der Vergleichskammer 27 in den Sekundärkanal 7 hinein, wobei es verschieblich und unter Abdichtung eine nachfolgend als Trennwand 49 bezeichnete gehäusefeste Wand durchsetzt, die die Vergleichskammer 27 vom Sekundärkanal 7 abtrennt. Das Stellglied 26 ragt dabei mit einem stirnseitig die Entlüftungsöffnung 48 aufweisenden Kopfabschnitt 53 in den Sekundärkanal 7 hinein, und zwar derart, daß sich die Entlüftungsöffnung unabhängig von der momentanen Stellung des Stellgliedes 26 ständig außerhalb der Vergleichskammer 27 innerhalb des Sekundärkanals 7 befindet.

Beim konkreten Ausführungsbeispiel ist der Kopfabschnitt 53 vom Ende einer stößelartigen Partie des Grundkörpers 32 gebildet, der vom Entlüftungskanal 47 koaxial durchsetzt wird.

Zur gehäuseseitigen Abdichtung kommt beispielsweise ein Dichtring 54 zum Einsatz, der in der vom Stellglied 26 durchsetzten Durchbrechung 52 der Trennwand 49 fixiert ist und dichtend am Außenumfang des diesbezüglich verschiebbaren Stellgliedes 26 anliegt.

Die Entlüftungsöffnung 48 des Stellgliedes 26 ist von einem Sekundär-Ventilsitz 55 umgrenzt, der mit einem im Bereich der vorderen Stirnseite des Steuergliedes 14 vorgesehenen Sekundär-Steuerabschnitt 56 zusammenarbeiten kann. Liegt der Sekundär-Steuerabschnitt 56 am Sekundär-Ventilsitz 55 an, ist die Entlüftungsöffnung 48 verschlossen. Nimmt hingegen der Sekundär-Ventilsitz 55 eine bezüglich des Sekundär-Steuerabschnitts 56 beabstandete Position ein, ist die Entlüftungsöffnung 48 freigegeben, was eine Verbindung zwischen dem Sekundärkanal 7 und der Atmosphäre bewirkt, so daß im Sekundärkanal 7 eingeschlossenes Druckmedium durch den Entlüftungskanal 47, die Federkammer 38 und die Auslaßkanäle 43 zur Umgebung abströmen kann. Dies führt gleichzeitig zu einer Verringerung des Sekundärdruckes.

### Die Funktionsweise des Druckregelventils ist folgende:

Ausgehend von einem im Sekundärkanal 7 anstehenden Sekundärdruck, der geringer als der gewünschte Sekundärdruck ist, wird das Steuerglied 14 durch das Stellglied 26 in eine Offenstellung verlagert. Dies rührt daher, daß die Vorgabekraft F₂ zu diesem Zeitpunkt noch größer ist als die Öffnungskraft F₁, die vom momentan herrschenden Sekundärdruck bestimmt wird. Infolge dessen wird das Stellglied 26 durch die Federeinrichtung 37 in Richtung zum Steuerglied 14 verlagert, wobei es dieses aus der Schließstellung in eine Offenstellung verschiebt. Da das Steuerglied 14 hierbei ständig am Sekundär-Ventilsitz 55 anliegt, bleibt die Entlüftungsöffnung 48 geschlossen.

Um die Verschiebebewegung des Steuergliedes 14 nicht zu behindern, ist die Gehäuseausnehmung 18 durch mindestens einen, vorzugsweise im Stößelkörper 16 verlaufenden Kanal 57 ständig mit dem Sekundärkanal 7 verbunden.

Über die nun freigegebene Überströmöffnung 12 strömt Druckluft aus dem Primärkanal 6 in den Sekundärkanal 7, so daß sich der Sekundärdruck erhöht und dementsprechend auch die vom Sekundärdruck abhängige Öffnungskraft F₁. Daher verlagert sich das Stellglied 26 allmählich in der Öffnungsrichtung 35, wobei die entsprechende Bewegung vom Steuerglied 14 simultan mitgemacht wird, insbesondere hervorgerufen durch eine auf das Stellglied 26 einwirkende Stellfeder 58, die vorzugsweise in der Gehäuseausnehmung 18 untergebracht ist.

Hat schließlich der Sekundärdruck den gewünschten Druckwert erreicht, bildet sich ein Kräftegleichgewicht zwischen der Öffnungskraft F₁ und der Vorgabekraft F₂ aus, was in einer gewissen Stellung des Stellgliedes 26 resultiert, bei der das Steuerglied 14 zweckmäßigerweise die Schließstellung bezüglich der Überströmöffnung 12 einnimmt.

Sollte der Sekundärdruck wieder abfallen, wird das Steuerglied 14 neuerlich durch das Stellglied 26 im Öffnungssinne verlagert, so daß Druckmedium aus dem Primärkanal 6 nachströmen kann.

Steigt der Sekundärdruck hingegen über den gewünschten Wert hinaus an, bewegt sich das Stellglied 26 auf Grund der im Vergleich zur Vorgabekraft F₂ größeren Öffnungskraft F₁ weiter in der Öffnungsrichtung, wobei sein Sekundär-Ventilsitz 55 vom Sekundär-Steuerabschnitt 56 abhebt, weil das Steuerglied 14 an einer Weiterbewegung durch das Erreichen seiner Schließstellung gehindert ist. Dies führt zu einer Freigabe der Entlüftungsöffnung 48, so daß Druckmedium unmittelbar aus dem Sekundärkanal 7 über die Entlüftungsöffnung 48 und den Entlüftungskanal 47 des Stellgliedes 26 an die Atmosphäre abströmen kann, was eine Reduzierung des Sekundärdruckes hervorruft. Auf Grund der sich dabei verringernden Öffnungskraft F₁ verlagert sich dann das Stellglied 26 wieder in der Schließrichtung 36, bis es schließlich wieder unter dichtem Verschließen der Entlüftungsöffnung 48 am Steuerglied 14 zur Anlage gelangt.

Bei dem vorgeschilderten Vorgang der Sekundärentlüftung ist von Vorteil, daß der Entlüftungsvorgang sich nicht mehr störend auf das als Vergleicher zwischen der aus dem Sekundärdruck resultierenden Öffnungskraft und der Vorgabekraft arbeitende Stellglied 26 auswirkt. Die Entlüftungsströmung verläuft nicht durch die Vergleichskammer 27 hindurch, so daß die Schwingungsneigung stark reduziert wird. Der Querschnitt des Verbindungskanals 34 kann sehr gering gehalten werden, so daß sich eine physikalische Dämpfung des Regelkreises einstellt, ohne sich nachteilig auf die während der Sekundärentlüftung mögliche Ausströmrate der Druckluft auszuwirken. Es kann im Gegenteil die Sekundärentlüftungsleistung des der Entlüftungsöffnung 48 zugeordneten Entlüftungsquerschnittes vergrößert werden.

Beim Ausführungsbeispiel wird ein im Vergleich zum Entlüftungsquerschnitt stark reduzierter Verbindungskanalquerschnitt dadurch realisiert, daß in den Verbindungskanal 34 eine Drosselstelle 62 eingeschaltet ist.

Die außerhalb der Vergleichskammer 27 angeordnete Entlüftungsöffnung 48 muß sich nicht notwendigerweise wie beim Ausführungsbeispiel unmittelbar im Sekundärkanal 7 befinden, sondern kann auch in einem anderen, mit dem Sekundärkanal 7 kommunizierenden Bereich liegen, beispielsweise in einer zusätzlichen Kammer im Bereich der Durchbrechung 52 außerhalb der Vergleichskammer 27.

Beim Ausführungsbeispiel erstreckt sich das Steuerglied 14 in einem als Steuerkammer 63 bezeichenbaren Abschnitt des Sekundärkanals 7 in vorzugsweise koaxialer Verlängerung der Überströmöffnung 12.

Um eine exakte Steuerbewegung des Steuergliedes 14 zu gewährleisten, ist das Steuerglied 14 an seinem der Entlüftungsöffnung 48 zugeordneten Endabschnitt innerhalb des Sekundärkanals 7 und vorliegend innerhalb der Steuerkammer 63 durch eine gehäusefeste Führungseinrichtung 64 in Querrichtung abgestützt und in Längsrichtung verschiebbar geführt. Die Führungseinrichtung verfügt dabei vorzugsweise über einen Führungseinsatz 65, der in der Durchbrechung 52 der Trennwand 49 verankert ist und ausgehend von dort in den Sekundärkanal 7 hineinragt, wobei er den Endabschnitt des Steuergliedes 14 zumindest partiell umschließt. Durch ein Sicherungselement 66 können der Führungseinsatz 65 und der Dichtring 54 gleichzeitig gehäusefest fixiert werden.

## Patentansprüche

1. Druckregelventil mit Sekundärentlüftungsmaßnahmen, mit einem mit einem Primärdruck beaufschlagbaren Primärkanal (6), mit einem den Abgriff eines geregelten Sekundärdruckes ermöglichenden Sekundärkanal (7) und mit einem zur Steuerung der Fluidverbindung zwischen dem Primärkanal (6) und dem Sekundärkanal (7) dienenden beweglichen Steuerglied (14), dessen Stellung durch ein mit einer einstellbaren Vorgabekraft beaufschlagbares bewegliches Stellglied (26) beeinflußbar ist, das von einem beweglichen Wandabschnitt einer mit dem Sekundärkanal (7) kommunizierenden Vergleichskammer (27) gebildet ist und das verschieblich und unter Abdichtung eine die Vergleichskammer (27) abtrennende gehäusefeste Trennwand (49) durchsetzt, wobei es außerhalb der Vergleichskammer (27) und dabei entweder unmittelbar im Sekundärkanal (7) oder in einem mit dem Sekundärkanal (7) in Verbindung stehenden Bereich eine ebenfalls von dem Steuerglied (14) gesteuerte, zur Entlüftung des Sekundärkanals (7) dienende Entlüftungsöffnung (48) aufweist, **dadurch gekennzeichnet, dass** das Steuerglied (14) an seinem der Entlüftungsöffnung (48) zugeordneten Endabschnitt innerhalb des Sekundärkanals (7) durch eine gehäusefeste Führungseinrichtung (64) verschiebbar geführt ist, die einen in der gehäusefesten Trennwand (49) verankerten Führungseinsatz (65) enthält, der in den Sekundärkanal (7) hineinragt und dort den Endabschnitt des Steuergliedes (14) zumindest partiell umschließt.

2. Druckregelventil nach Anspruch 1, **dadurch gekennzeichnet, dass** sich das Steuerglied (14) in einer als Bestandteil des Sekundärkanals (7) ausgeführten Steuerkammer (63) erstreckt, wobei die Entlüftungsöffnung (48) innerhalb dieser Steuerkammer (63) liegt.

3. Druckregelventil nach Anspruch 1 oder 2, **dadurch gekennzeichnet, dass** die Entlüftungsöffnung (48) an einem in den Sekundärkanal (7) hineinragenden Kopfabschnitt (53) des Stellgliedes (26) vorgesehen ist.

4. Druckregelventil nach Anspruch 3, **dadurch gekennzeichnet, dass** der Kopfabschnit (53) des Stellgliedes (26) im Sekundärkanal (7) mit einem stirnseitigen Sekundär-Steuerabschnitt (56) des Steuergliedes (14) zusammenarbeitet.

5. Druckregelventil nach einem der Ansprüche 1 bis 4, **dadurch gekennzeichnet, dass** die Vergleichskammer (27) über mindestens einen Verbindungskanal (34) mit dem Sekundärkanal (7) in Verbindung steht.

6. Druckregelventil nach Anspruch 5, **dadurch gekennzeichnet, dass** der der Entlüftungsöffnung (48) zugeordnete maximale Entlüftungsquerschnitt größer ist als der Querschnitt des mindestens einen Verbindungskanals (34).

7. Druckregelventil nach Anspruch 5 oder 6, **dadurch gekennzeichnet, dass** der Verbindungskanal (34) mit einer Drosselstelle (62) versehen ist.

8. Druckregelventil nach einem der Ansprüche 1 bis 7, **gekennzeichnet durch** ein stößelartiges Steuerglied (14).

9. Druckregelventil nach einem der Ansprüche 1 bis 8, **dadurch gekennzeichnet, dass** das Stellglied (26) durch eine gleitende Dichtung oder eine Membrandichtung (28) gehäuseseitig abgedichtet ist.

10. Druckregelventil nach einem der Ansprüche 1 bis 9, **dadurch gekennzeichnet, dass** das Stellglied (26) einen die Entlüftungsöffnung (48) enthaltenden Grundkörper (32) aufweist, der über eine Membran (33) unter Abdichtung gehäuseseitig fixiert ist.

## Claims

1. Pressure regulating valve with secondary venting measures, with a primary passage (6) to which a primary pressure may be supplied, with a secondary passage (7) allowing the tapping of a regulated secondary pressure, and with a movable control element (14) serving to control the fluidic connection between the primary passage (6) and the secondary passage (7) and the position of which may be influenced by a movable actuator (26) which can be pressurised by an adjustable preset force and is formed by a movable wall section of a comparison chamber (27) communicating with the secondary passage (7) and which passes through, sliding and with sealing, a partition (49) fixed to the housing and separating the comparison chamber (27), wherein it has outside the comparison chamber (27) and at the same time either directly in the secondary passage (7) or in an area connected to the secondary passage (7) a vent opening (48), likewise controlled by the control element (14) and serving to vent the secondary passage (7), **characterised in that** the control element (14) is slidably guided, at its end section within the secondary passage (7) assigned to the vent opening (48), by a guiding device (64) fixed to the housing, which contains a guide insert (65) anchored in the partition (49) fixed to the housing and extending into the secondary passage (7), where it at least partially encompasses the end section of the control element (14).

2. Pressure regulating valve according to claim 1, **characterised in that** the control element (14) extends in a control chamber (63) made as part of the secondary passage (7), while the vent opening (48) lies within this control chamber (63).

3. Pressure regulating valve according to claim 1 or 2, **characterised in that** the vent opening (48) is provided on a head section (53) of the actuator (26) extending into the secondary passage (7).

4. Pressure regulating valve according to claim 3, **characterised in that** the head section (53) of the actuator (26) works together in the secondary passage (7) with an end secondary control section (56) of the control element (14).

5. Pressure regulating valve according to any of claims 1 to 4, **characterised in that** the comparison chamber (27) is connected to the secondary passage (7) via one or more connecting passages (34).

6. Pressure regulating valve according to claim 5, **characterised in that** the venting cross-section assigned to the vent opening (48) is greater than the cross-section of the connecting passage or passages (34).

7. Pressure regulating valve according to claim 5 or 6, **characterised in that** the connecting passage (34) is provided with a restrictor (62).

8. Pressure regulating valve according to any of claims 1 to 7, **characterised by** a plunger-like control element (14).

9. Pressure regulating valve according to any of claims 1 to 8, **characterised in that** the actuator (26) is sealed on the housing side by a sliding seal or a membrane seal (28).

10. Pressure regulating valve according to any of claims 1 to 9, **characterised in that** the actuator (26) has a base body (32) containing the vent opening (48) and fixed at the housing side with sealing via a membrane (33).

## Revendications

1. Soupape de régulation de pression comportant des moyens de purge d'air secondaire, un canal primaire (6) pouvant recevoir une pression primaire, un canal secondaire (7) permettant de prélever une pression secondaire régulée et comportant un élément de commande mobile (14) servant à la commande de la liaison fluidique entre le canal primaire (6) et le canal secondaire (7), élément de commande dont la position peut être influencée par un élément de réglage (26) mobile pouvant être soumis à une force sélectionnée réglable, lequel est formé par une portion de paroi mobile d'une chambre de comparaison (27) communiquant avec le canal secondaire (7), et qui traverse, de façon coulissante et avec étanchéité, une cloison (49) solidaire du boîtier, séparant la chambre de comparaison (27), tandis qu'à l'extérieur de la chambre de comparaison (27) et ici, soit directement dans le canal secondaire (7), soit dans une zone en liaison avec le canal secondaire (7), il présente un orifice de purge d'air (48) commandé également par l'élément de commande (14) et servant à la purge d'air du canal secondaire (7), **caractérisée en ce que** l'élément de commande (14) est guidé en coulissement, dans sa portion terminale associée à l'orifice de purge d'air (48), à l'intérieur du canal secondaire (7), par un dispositif de guidage (64) solidaire du boîtier, lequel contient un insert de guidage (65) ancré dans la cloison (49) solidaire du boîtier et qui pénètre à l'intérieur du canal secondaire (7) et entoure à cet endroit au moins partiellement la portion terminale de l'élément de commande (14).

2. Soupape de régulation de pression selon la revendication 1, **caractérisée en ce que** l'élément de commande (14) s'étend dans une chambre de commande (63) réalisée comme partie intégrante du canal secondaire (7), l'orifice de purge d'air (48) se situant à l'intérieur de cette chambre de commande (63).

3. Soupape de régulation de pression selon la revendication 1 ou 2, **caractérisée en ce que** l'orifice de purge d'air (48) est prévu dans une portion de tête (53), pénétrant à l'intérieur du canal secondaire (7), de l'élément de réglage (26).

4. Soupape de régulation de pression selon la revendication 3, **caractérisée en ce que** la portion de tête (53) de l'élément de réglage (26) coopère dans le canal secondaire (7) avec une portion de commande secondaire (56) frontale de l'élément de commande (14).

5. Soupape de régulation de pression selon l'une des revendications 1 à 4, **caractérisée en ce que** la chambre de comparaison (27) est en liaison avec le canal secondaire (7), par au moins un canal de liaison (34).

6. Soupape de régulation de pression selon la revendication 5, **caractérisée en ce que** la section de purge d'air maximale, associée à l'orifice de purge d'air (48), est supérieure à la section transversale du au moins un canal de liaison (34).

7. Soupape de régulation de pression selon la revendication 5 ou 6, **caractérisée en ce que** le canal de liaison (34) est pourvu d'un point d'étranglement (62).

8. Soupape de régulation de pression selon l'une des revendications 1 à 7, **caractérisée par** un élément de commande (14) de type poussoir.

9. Soupape de régulation de pression selon l'une des revendications 1 à 8, **caractérisée en ce que** l'élément de réglage (26) est rendu étanche côté boîtier par une garniture d'étanchéité glissante ou une étanchéité à membrane (28).

10. Soupape de régulation de pression selon l'une des revendications 1 à 9, **caractérisée en ce que** l'élément de réglage (26) comporte un corps de base (32) contenant l'orifice de purge d'air (48) et qui est fixé côté boîtier par l'intermédiaire d'une membrane (33), avec étanchéité.
